# EUROPÄISCHE PATENTSCHRIFT

(11) **EP 0 713 227 B1**
(45) Veröffentlichungstag und Bekanntmachung des Hinweises auf die Patenterteilung: **26.08.1998**
(21) Anmeldenummer: 95810680.9
(22) Anmeldetag: 31.10.1995
(51) Int. Cl.: H01C 7/02, H01C 1/08, H01C 1/082, H02H 9/02

(54) **Kaltleiter und Vorrichtung zur Strombegrenzung mit mindestens einem Kaltleiter**
Thermistor and current limiting device with at least one thermistor
Thermistance et dispositif de limitation de courant avec au moins une thermistance

(30) Priorität: 19.11.1994 DE 4441280
(43) Veröffentlichungstag der Anmeldung: 22.05.1996
(73) Patentinhaber: ASEA BROWN BOVERI AG, 5400 Baden (CH)
(72) Erfinder: Baiatu, Tudor, Dr., CH-5200 Brugg (CH)

(56) Entgegenhaltungen:
- WO-A-93/07667
- DE-C- 3 942 266
- DE-U- 9 100 865
- FR-A- 2 206 610
- FR-A- 2 348 614
- FR-A- 2 606 929
- GB-A- 294 549

## Beschreibung

### TECHNISCHES GEBIET

Bei der Erfindung wird ausgegangen von einem Kaltleiter nach dem Oberbegriff des Patentanspruchs 1 und von einer Vorrichtung zur Strombegrenzung mit mindestens einem Kaltleiter nach dem Oberbegriff der Patentansprüche 5 und 6.

### STAND DER TECHNIK

Mit dem Oberbegriff des Patentanspruchs 1 nimmt die Erfindung auf einen Stand der Technik Bezug, wie er aus der DE 39 42 266 Cl bekannt ist. Dort wird die von einem PTC-Heizkörper entwickelte Wärme über dessen Elektroden an einen hohlen Trägerprofilkörper aus Aluminium abgeführt, der gegenüber den Elektroden durch eine Isolierfolie elektrisch isoliert ist. Eine im Trägerprofilkörper verankerte Blattfeder drückt gegen dessen relativ dünne Oberwand.

Es handelt sich hierbei um eine Niederspannungsanwendung eines PTC-Heizkörpers mit geringer Anforderung an die elektrische Isolation.

Mit dem Oberbegriff der Patentanspüche 5 und 6 nimmt die Erfindung auf einen Stand der Technik Bezug, wie er aus der FR 2606929 A1 bekannt ist. Dort ist eine Schutzschaltung gegen Überströme angegeben, bei der in einem 1. Parallelstromzweig zu einem mechanischen Schalter ein 1. Varistor in Reihe zu einem Polymerkaltleiter vorgesehen ist, und in einem 2. Parallelstromzweig ein 2. Varistor, dessen Ansprechcharakteristik von derjenigen des 1. Varistors abweicht. Mit dieser Schutzschaltung lassen sich Kurzschlußströme nach mehr als 1 ms begrenzen, bedingt durch die Trägheit des mechanischen Schalters, nicht aber innerhalb von 10 µs.

Gemäß der DE-OS 27 15 878 ist ein Widerstandskörper aus einem Material mit einem positiven Temperaturkoeffizienten des Widerstandes mitsamt seinen Elektroden in eine Masse aus 30 M% Silikongummi und 70 M% Magnesiumoxid eingebettet und gibt die in ihm erzeugte Wärme an ein Aluminium-Heizrohr eines Frisierstabes ab. Diese Heizvorrichtung ist für eine Dauergebrauchstemperatur bis 149 °C geeignet.

Aus der DE-AS 1 204 302 ist, eine weitere Schalteinrichtung zum Unterbrechen von Stromkreisen bekannt, bei der 2 in Reihe geschaltete Thermistoren in einem 1. Stromkreis, 2 in Reihe geschaltete Varistoren in einem elektrisch parallelgeschalteten 2. Stromkreis und ein Schalter in einem weiteren parallelgeschalteten 3. Stromkreis angeordnet sind. Es handelt sich hierbei um eine mutationsschaltung, bei der die Thermistoren auf der Basis von Bariumoxid und Bariumtitanat, die nur wenige Ampere Dauerstrom tragen können, im Dauerbetrieb unbelastet sind.

Aus der US-A-4,583,146 ist es ebenfalls bekannt, zur Gewährleistung eines lichtbogenarmen Löschens in Parallel zweigen zu einem mechanischen Unterbrecherkontakt einen Kaltleiter und einen Varistor zu schalten. Der Kaltleiter kann endseitig eine dünne Varistorschicht aufweisen. Beim Öffnen des mechanischen Schalters kommutiert der Strom von diesem auf den Kaltleiter und Varistor.

In Schaltungen ohne Unterbrecherkontakt ist das dynamische Ansprechverhalten einer derartigen Strombegrenzerschaltung unbefriedigend.

Aus der CH-A-581 377 ist es bekannt, einen Kaltleiter zu einem Festwiderstand und zu einem thermisch oder magnetisch auslösbaren 1. Schalter parallelzuschalten, wobei in Reihe zu dieser Parallelschaltung ein spannungaufbauender 2. Schalter vorgesehen ist. Dabei wird der Kaltleiter erst im Kurzschlußfall belastet, erhöht dabei seinen Widerstand und ermöglicht ein weitgehend lastfreies Schalten des 2. Schalters. Anstelle eines Kaltleiters können mehrere unterschiedliche Kaltleiter parallelgeschaltet sein, die zeitlich nacheinander ansprechen.

Aus der Veröffentlichung von P. Bujard und J. P. Ansermet, THERMALLY CONDUCTIVE ALUMINIUM NITRIDE-FILLED EPOXY in: 5. IEEE SEMI-THERM Symposium (1989), S. 126 - 130, ist es bekannt, bei einer mit Aluminiumnitrid (AlN) gefüllten Polymermatrix, wie sie zur Herstellung von Kaltleitern geeignet ist, einen Füllgrad von 62 Vol% zu erreichen.

Bei Stromrichtern, die einen Gleichspannungszwischenkreis aufweisen, können im Kurzschlußfall durch eine impedanzarme Entladung der Zwischenkreiskondensatoren sehr hohe Kurzschlußströme im Zwischenkreis auftreten, die ohne Schutzmaßnahme zur Zerstörung von aktiven Bauelementen führen können und Konstruktionsteile mit hohen Kräften beanspruchen und verformen.

Aus der DE 3 710 799 A1 ist es bekannt, bei einer Wechselrichterschaltung in Reihenschaltung zu Kondensatoren eine Schmelzsicherung vorzusehen, die durchschmilzt und den Schaltkreis unterbricht, wenn ein Gleichstromkondensator kurzgeschlossen wird. Es vergeht eine Zeitspanne von ggf. einigen 100 ms ab dem Zeitpunkt des Kurzschlusses der Leitungen der Wechselrichterschaltung, bevor ein Detektor für das Durchschmelzen der Sicherung verzögert diesen Kurzschluß wahrnimmt. Wahrgenommen wird nur ein interner Kurzschluß eines Gleichstromkondensators. Bei einem internen Kurzschluß eines Kondensators werden dadurch die zugehörigen Geräte und Schaltungen geschützt. Anstelle der Schmelzsicherung kann auch für Gruppen von in Reihe geschalteten Gleichstromkondensatoren als Störungsdetektor ein Differentialverstärker vorgesehen sein, der eine Störung anhand einer Potentialdifferenz detektiert.

Für Traktionsstromrichter, die erhöhten Vibrations- und Stoßbeanspruchungen ausgesetzt sind, ist der Einsatz herkömmlicher Schmelzsicherungen auf Grund ihrer geringen Zuverlässigkeit nicht möglich bzw. von den Bahnbetreibern unerwünscht. Schmelzsicherungen sind große Bauelemente mit viel Verkabelungsaufwand, die hohe Gegenspannungen aufbauen, was für den Betrieb von Stromrichtern mit abschaltbaren Halbleitern störend ist. Geforderte Ansprechempfindlichkeiten von weniger als 100 µs sind schwer, wenn überhaupt, ausführbar.

Wünschenswert für den Stromrichterbetrieb ist eine deutliche Reduktion bzw. der Entfall der Zwischenkreisinduktivität. Ohne Schutzmaßnahme steigen jedoch hierdurch im Kurzschlußfall die Kurzschlußstromamplituden auf Werte bis zu 1 MA an, die derzeit in Traktionssystemen mit Stromrichtern mechanisch nicht beherrscht werden können.

Zum einschlägigen Stand der Technik wird ferner auf die CH-PS 581 377 verwiesen, aus der ein Kaltleiter-Bauelement mit einem keramischen PTC-Widerstand bekannt ist, der an seinen Elektroden gekühlt wird. Seine randseitige isolierende Schutzschicht aus Epoxidharz ist schlecht wärmeleitend.

Aus der US-PS 3,996,447 ist es bekannt, bei einem Heizkörper mit einem PTC-Widerstand zwischen Elektroden und Kühlkörper eine Wärmeleitpaste anzubringen, nicht jedoch an der Mantelfläche.

Aus dem deutschen Gebrauchsmuster G 91 00 865.4 ist ein flüssigkeitsgekühlter, niederinduktiver, geschlitzter Hochlastwiderstand mit wenigstens 2 voneinander beabstandeten, deckungsgleichen Widerstandsbahnen bekannt, bei dem die Widerstandsbahnen elektrisch so miteinander verbunden sind, daß der Strom in antiparalleler Richtung fließen kann. Die Widerstandsbahnen sind einerseits mit einem Trägerkörper und andererseits mit elektrisch isolierenden, wärmeleitenden Scheiben verklebt, welche die erzeugte Wärme an Flüssigkeitskühlkörper ableiten.

Aus der DE-AS 1 253 332 ist eine Kommutationsschaltung zum Abschalten hoher Ströme bekannt, bei der Normalleiter mit Kaltleitern thermisch gekoppelt und elektrisch in Reihe geschaltet sind. Auch hier tragen die Kaltleiter keinen Dauerstrom.

Aus der DE 41 05 786 A1 ist ein mäanderförmiger Normalwiderstand aus 2 spiegelbildlich in einer Ebene angeordneten Teilwiderständen bekannt, der in Dünnfilm- oder Siebdrucktechnik auf einen elektrisch isolierenden und thermisch gutleitenden Keramikkühlkörper aufgebracht ist. Unerwünscht ist eine relativ hohe Induktivität dieses Widerstandes.

Aus der DE 33 38 709 A1 ist ein flüssigkeitsgekühlter, niederinduktiver Widerstand bekannt, bei dem ein Widerstandsdraht zickzackförmig in Nuten eines plattenförmigen Keramikformteils geführt ist, welches an einen Kühlkörper mit Strömungskanälen angepreßt wird. Zur Verkleinerung von Kriechstrecken sind Widerstandsdraht und Keramikformteil mit einer Glasur überzogen.

### DARSTELLUNG DER ERFINDUNG

Die Erfindung, wie sie in den Patentansprüchen 1, 5 und 6 definiert ist, löst die Aufgabe, Kaltleiter und Vorrichtungen zur Strombegrenzung der eingangs genannten Art derart weiterzuentwickeln, daß sie einen Dauerstrom von mehr als 100 A führen und Kurzschlußströme innerhalb von 10 µs auf einen Wert begrenzen können, der unterhalb der Zerstörungsgrenze von passiven Komponenten der zu schützenden elektrischen Anlagen oder Schaltkreise liegt.

Ein Vorteil der Erfindung besteht darin, daß mit diesen Kaltleitern betriebene Schutzeinrichtungen reversibel arbeiten, lichtbogenfrei ansprechen sowie niederinduktiv und raumsparend einsetzbar sind. Die Schutzschaltungen sind verlustarm, rüttelfest und in einen bestehenden Kühlkreislauf integrierbar; sie sprechen autonom an und ermöglichen eine flexible Applikation. Die Zuverlässigkeit des Schutzsystems wird durch zusätzliche elektronische Baugruppen und Komponenten nicht beeinträchtigt.

Werden die Strombegrenzerschaltungen in Reihenschaltung zu Stromrichterventilen eingesetzt, so kann auf eine Stromanstiegsbegrenzungsdrossel verzichtet werden.

Gemäß einer vorteilhaften Ausgestaltung der Erfindung können Kurzschlußströme innerhalb von 10 µs auf Werte begrenzt werden, die unterhalb der Zerstörungsgrenze von aktiven Komponenten der zu schützenden elektrischen Anlagen oder Schaltkreise liegen. Dabei ist eine Kühlung des Aktivteils der Vorrichtungen zur Strombegrenzung unerläßlich. Diese Kühlung kann bei einer schon vorhandenen Flüssigkeitskühlung in deren Kühlkreislauf integriert werden.

Durch Anpassung der Aktivteilbemessung der Kaltleiter kann das Kurzschlußverhalten der Schutzschaltungen den unterschiedlichen elektrischen Kennwerten verschiedener Stromrichtertypen flexibel angepaßt werden.

Mit den erfindungsgemäßen Kaltleitern ist es möglich, die intern in einem Stromrichter gespeicherte Energie einer Kondensatorbank von einem Kurzschluß in den Stromrichterschaltern bzw. Halbleitern zu entkoppeln. Dabei können die Vorrichtungen zur Strombegrenzung entweder im Gleichspannungszwischenkreis oder in den Phasenbausteinen angeordnet werden. Auf Grund der Modularität der Zwischenkreis-Kondensatorbatterie, die ggf. bis zu 40 parallelgeschaltete Kondensatoren aufweist, kann der Kurzschlußschutz wahlweise an einem oder an mehreren parallelgeschalteten Kondensatoren angeordnet werden.

### KURZE BESCHREIBUNG DER ZEICHNUNGEN

Die Erfindung wird nachstehend anhand von Ausführungsbeispielen erläutert. Es zeigen:
- Fig. 1: eine 2Punkt-Stromrichterschaltung mit einem Antriebsstromrichter, der über einen Gleichspannungszwischenkreis mit einem Netzstromrichter verbunden ist, wobei im Kurzschlußpfad von Kondensatoren des Gleichspannungszwischenkreises ein reversibler Strombegrenzer angeordnet ist,
- Fig. 2: eine Stromrichterschaltung gemäß Fig. 1 mit 3Punkt-Stromrichtern,
- Fig. 3 - 5: unterschiedliche Strombegrenzerschaltungen mit Kaltleitern, Varistoren und Induktivitäten,
- Fig. 6: eine konstruktives Ausführungsbeispiel der Widerstandsbahn eines Kaltleiters einer Strombegrenzerschaltung gemäß den Fig. 3 - 5 und
- Fig. 7: den Prinzipaufbau eines erdpotentialfrei betreibbaren Kaltleiters mit Brauchwasserkühlung für große elektrische Leistungen.

### WEGE ZUR AUSFÜHRUNG DER ERFINDUNG

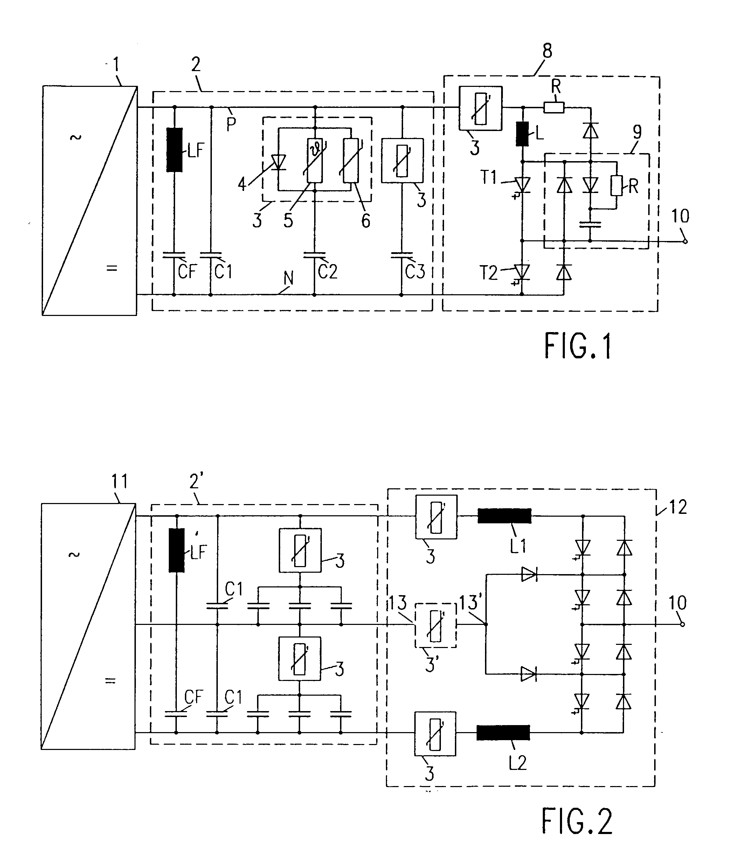

Fig. 1 zeigt einen Netzstromrichter oder 1. Stromrichter (1), der gleichspannungsseitig über einen Gleichspannungszwischenkreis (2) mit einem Antriebsstromrichter bzw. 2. Stromrichter (8) elektrisch verbunden ist.

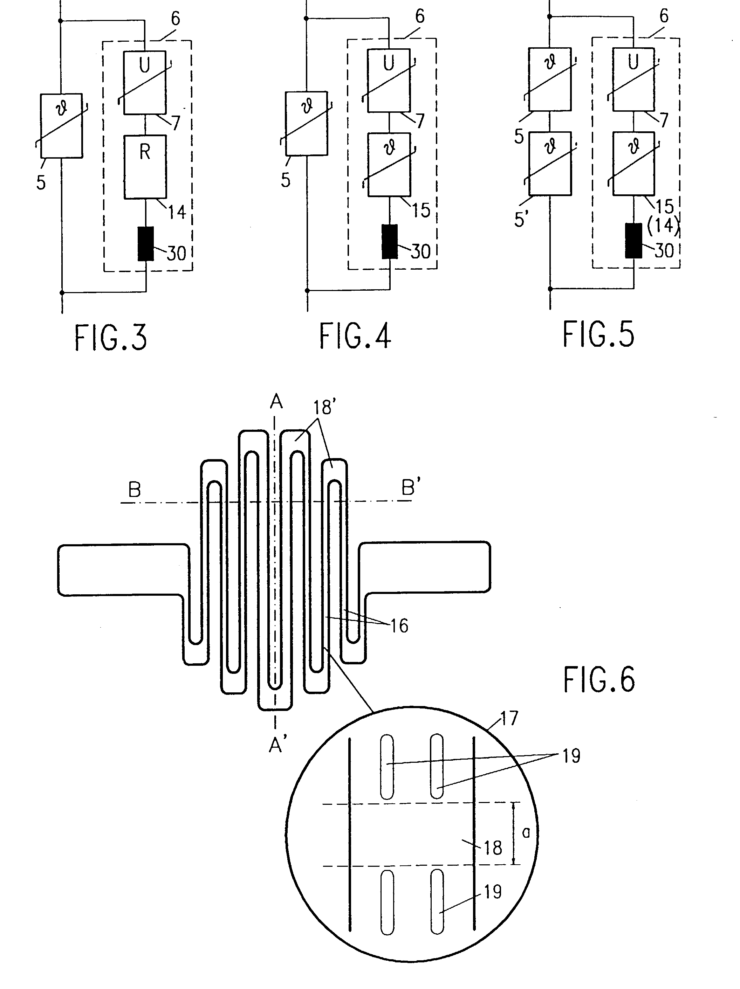

Der Gleichspannungszwischenkreis (2) weist zwischen einem positiven Pol bzw. einer positiven Polplatte (P) und einem negativen Pol bzw. einer negativen Polplatte (N) ein Filter zur Dämpfung von Zwischenkreisoberschwingungen aus einer Reihenschaltung einer Filterdrossel (LF) und eines Filterkondensators (CF) auf; ferner Zwischenkreiskondensatoren bzw. Kondensatoren (C1, C2, C3), wobei die Kondensatoren (C2, C3) mit je einem reversiblen Kurzschlußstrombegrenzer (3) in Reihe geschaltet sind. Der reversible Kurzschlußstrombegrenzer (3) weist eine Parallelschaltung einer in Sperrichtung eines Kurzschlußpfades gepolten Diode (4), eines PTC-Widerstandes bzw. Kaltleiters (5) und eines Nebenschlußwiderstandszweiges (6) auf, der einen Überspannungsableiter bzw. Varistors (7) umfaßt, vgl. die Fig. 3 - 5. Der Kaltleiter (5) und der Nebenschlußwiderstandszweig (6) sind im Kurzschlußstrombegrenzer (3) stets vorhanden; die Diode (4) kann parallelgeschaltet sein.

Die beiden Stromrichter (1, 8) sind als 2Punkt-Stromrichter ausgeführt, wobei für den Stromrichter (8) in Fig. 1 nur zwei Hauptventilzweige mit 2 GTO-Thyristoren (T1, T2) als Hauptventilen für eine Wechselstromphase, die an einer Wechselspannungsklemme (10) abgreifbar ist, gezeigt sind. Für 3phasigen Wechselstrom sind entsprechend 6 gleichartig aufgebaute Hauptventilzweige erforderlich. Parallel zu jedem Hauptventil (T1, T2) ist eine Thyristorbeschaltung (9) vorgesehen, wobei der Übersichtlichkeit halber nur diejenige zum GTO-Thyristor (T1) dargestellt ist. Es versteht sich, daß die Thyristorbeschaltung (9) auch eine andere Schaltung als die dargestellte aufweisen könnte. Im Strompfad der beiden Hauptventile (T1, T2) ist eine Drossel bzw. di/dt-Begrenzungsdrossel (L) über einen reversiblen Kurzschlußstrombegrenzer (3) mit dem positiven Pol (P) des Gleichspannungszwischenkreises (2) verbunden. In einem Parallelzweig zur di/dt-Begrenzungsdrossel (L) ist eine Diode mit einem ohmschen Widerstand in Reihe geschaltet. Diese di/dt-Begrenzungsdrossel (L) kann bei Verwendung des erfindungsgemäßen Kurzschlußstrombegrenzers (3) sehr klein gehalten werden oder entfallen.

Der reversible Kurzschlußstrombegrenzer (3) im 2. Stromrichter (8) kann entfallen, wenn reversible Kurzschlußstrombegrenzer (3) im Gleichspannungszwischenkreis (2) vorgesehen sind. Andererseits können die reversiblen Kurzschlußstrombegrenzer (3) im Gleichspannungszwischenkreis (2) entfallen, wenn ein reversibler Kurzschlußstrombegrenzer (3) im 2. Stromrichter (8) vorgesehen ist.

Fig. 2 zeigt als 2. Ausführungsbeispiel eine der Fig. 1 ähnliche Stromrichterschaltung, die anstelle von 1. und 2. 2Punkt-Stromrichtern (1, 8) 1. und 2. 3Punkt-Stromrichter (11, 12) aufweist. Gleiche Bauelemente sind gleich bezeichnet. In einem Gleichspannungszwischenkreis (2') ist für jede Potentialhälfte ein reversibler Kurzschlußstrombegrenzer (3) in Reihe zu einer Kondensatorbank geschaltet, die mehrere parallelgeschaltete Kondensatoren aufweist. Der Vorteil dieser Beschaltung besteht in einer Kostenreduktion der Schutzbeschaltung, da weniger reversible Kurzschlußstrombegrenzer (3, 3') benötigt werden, bzw. in einer geringeren Systemdiversifizierung, da weniger Typen von reversiblen Kurzschlußstrombegrenzern (3, 3') für das Stromrichtersortiment erforderlich sind.

Bei dem 3Punkt-Stromrichter (12) sind zu den Hauptventilen jedes Hauptventilzweiges di/dt-Begrenzungsdrosseln (L1, L2) in Reihe geschaltet, welche mit dem positiven Pol (P) bzw. mit dem negativen Pol (N) des Gleichspannungszwischenkreises (2') elektrisch verbunden sind. Sie können sehr klein sein oder weggelassen werden. Anstelle der beiden reversiblen Kurzschlußstrombegrenzer (3) kann im Nullpunkt- bzw. Mittelpunktpfad des Stromrichters (12) ein gestrichelt dargestellter reversibler Kurzschlußstrombegrenzer (3') vorgesehen sein, welcher einerseits mit einem Mittelpunktleiter (13') dieses Mittelpunktpfades und andererseits mit einem Mittelpunktleiter (13) des Gleichspannungszwischenkreises (2') elektrisch verbunden ist. Dadurch wird für viele Störfälle ein ausreichender Schutz bewirkt. Es versteht sich, daß auch bei diesem Ausführungsbeispiel die reversiblen Kurzschlußstrombegrenzer (3, 3') im 2. Stromrichter (12) entfallen können, wenn reversible Kurzschlußstrombegrenzer (3) im Gleichspannungszwischenkreis (2') den gewünschten Schutz gewährleisten, und umgekehrt.

Wichtig ist, daß im Kurzschlußstrompfad mindestens eines Zwischenkreiskondensators (C2, C3) ein reversibler Kurzschlußstrombegrenzer (3, 3') vorgesehen ist. Dadurch werden etwaige Kurzschlußentladeströme der Kondensatoren (C2, C3) auf Werte begrenzt, die mindestens unterhalb der Zerstörungsgrenze der passiven Komponenten und der Stromschienen liegen, idealerweise unterhalb der Zerstörungsgrenze der aktiven Bauelemente. Die hierfür erforderlichen Reaktionszeiten der Schutzschaltung liegen innerhalb von 10 µs.

Die Schutzschaltungen gemäß den Fig. 1 und 2 gewährleisten sowohl bei einem Teilkurzschluß als auch bei einem Vollkurzschluß eines Stromrichters (1, 8; 11, 12) einen guten Schutz.

Durch die Parallelschaltung einer Diode (4) zu einem Kaltleiter (5) kann die thermische Dauerstrombelastung der reversiblen Kurzschlußstrombegrenzer (3, 3') reduziert werden. Bei Betrieb unter Nennbedingungen leitet die Diode (4) während einer Halbperiode der Zwischenkreis-Pulsfrequenz und reduziert so den Effektivstrom. Im Kurzschlußfall sperrt die Diode (4), und die Schutzfunktion des reversiblen Kurzschlußstrombegrenzers (3, 3') ist voll wirksam.

Läßt man einen oder mehrere Zwischenkreiskondensatoren (C1) ohne reversiblen Kurzschlußstrombegrenzer (3), während die übrigen Zwischenkreiskondensatoren (C2, C3) einen aufweisen, so erreicht man einen Schutz gegen Abschaltüberspannungen. Die Kurzschlußstromamplitude des Gesamtstromes im Gleichspannungszwischenkreis erhöht sich jedoch anteilmäßig.

Fig. 3 zeigt einen Kurzschlußstrombegrenzer (3), bei dem zu einem Kaltleiter (5) in einem 1. bzw. Hauptstrompfad ein Nebenschlußwiderstandszweig (6) mit einer Reihenschaltung aus einem Varistor (7), einem ohmschen Widerstand (14) und einer Drossel oder Induktivität (30) parallelgeschaltet ist. In einem Fehler- bzw. Kurzschlußfall erwärmt sich der Kaltleiter (5) über seine Ansprechtemperatur hinaus, so daß dessen Widerstand stark ansteigt und den Strom begrenzt. Eine thermische Zerstörung des Kaltleiters (5) wird durch eine Kommutation des Kurzschlußstromes auf den Nebenschlußwiderstandszweig (6) vermieden. Der Kurzschlußstrom wird hierbei auf Werte begrenzt, die für den Gleichspannungszwischenkreis (2) unschädlich sind. Nach der Entladung der in Reihe zum Kurzschlußstrombegrenzer (3) geschalteten Kondensatoren (C2, C3) und Abtrennen des 1. Stromrichters (1) von einer nicht dargestellten einspeisenden Energiequelle kühlt der Kaltleiter (5) ab und ist wieder betriebsbereit.

Der Kaltleiter (5) kann ein nichtsperrender Kaltleiter auf einer Metallbasis mit Widerstandssprüngen auf ca. das 10fache, vorzugsweise auf weniger als das 100fache seines Kaltwiderstandes, oder ein sperrender Kaltleiter auf der Basis von gefüllten Polymeren sein, die Widerstandsprünge auf mehr als das 100fache, vorzugsweise auf mehr als das 10⁴fache des Kaltwiderstandes aufweisen.

Wesentlich für die Schaltung gemäß Fig. 3 ist die Verwendung eines Varistors (7), vorzugsweise auf der Basis von Metalloxid, dessen höchstzulässige Dauerbetriebsspannung vorzugsweise unterhalb der Betriebsspannung des Gleichspannungszwischenkreises (2) liegt. Der in Reihe zum Varistor (7) geschaltete ohmsche Widerstand (14) verbessert das Strombegrenzungsverhalten der Schaltung.

Anstelle des ohmschen Widerstandes (14) gemäß Fig. 3 kann ein bei Betriebsspannung sperrender oder nichtsperrender Kaltleiter (15) gemäß Fig. 4 verwendet werden. Dies führt zu einem verbesserten Strombegrenzungsverhalten des Kurzschlußstrombegrenzers (3). Weisen beide Kaltleiter (5, 15) eine Widerstands-Temperaturcharakteristik mit hohen Widerstandssprüngen auf Widerstandswerte auf, die deutlich größer als der 100fache, vorzugsweise größer als der 10⁴fache Kaltwiderstandswert sind (sperrender Kaltleiter (5)), so kann ein stromsperrendes Verhalten der Gesamtschaltung erreicht werden. Dadurch wird es möglich, den Kurzschlußstrombegrenzer (3) als Schutzelement in elektrischen Energieverteilungssystemen oder -netzen mit länger anstehenden Spannungen am Kurzschlußstrombegrenzer (3) einzusetzen.

Der Kurzschlußstrombegrenzer (3) gemäß Fig. 5 unterscheidet sich von demjenigen der Fig. 4 dadurch, daß im Haupstrompfad ein nichtsperrender Kaltleiter (5) mit einem sperrenden Kaltleiter (5') in Reihe geschaltet ist. Dabei wird der sperrende Kaltleiter (5') so ausgelegt, daß sich sein Widerstand erst nach einem Ansprechen des nichtsperrenden Kaltleiters (5) erhöht, d. h., daß er zeitlich verzögert anspricht, vgl. z. B. die eingangs genannte CH-A-581 377. Dadurch wird der Kaltleiter (5') elektrisch und thermisch entlastet. Im Nebenschlußwiderstandszweig (6) kann der Kaltleiter (15) durch einen ohmschen Widerstand (14) gemäß Fig. 3 ersetzt sein. In beiden Fällen ist die Schaltung gemäß Fig. 5 geeignet auch unter Überlastbedingungen zu schützen, wobei der Varistor (7) sperrend bleibt. Die Dauerbetriebsspannung des Varistors (7) muß in diesem Fall höher als die Betriebsspannung des Gleichspannungszwischenkreises (2) sein.

Falls eine hohe Nennstromtragfähigkeit von einigen 100 A bei kurzer Ansprechzeit im Kurzschlußfall und bei geringem Bauvolumen des Kurzschlußstrombegrenzers (3) gefordert wird, müssen zumindest die Kaltleiter (5, 5') des Kurzschlußstrombegrenzers (3) gekühlt werden. Diese Kühlung kann bei Hochleistungsstromrichtern mit einer vorhandenen Flüssigkeitskühlung in den Kühlkreislauf integriert werden. Die Gesamtverluste der Schutzeinrichtung sind für die Verlustbilanz des Stromrichters (1, 8; 11, 12) unbedeutend.

Durch die im Nebenschlußwiderstandszweig (6) vorzugsweise vorgesehene Induktivität (30) kann eine Verbesserung des Strombegrenzungsverhaltens der Gesamtschaltung erreicht werden.

Fig. 6 zeigt die Form einer Widerstandsbahn eines nichtsperrenden Kaltleiters (5), der in seinem zentralen Teil mäanderförmig und symmetrisch bezüglich einer Schnittebene (A - A') ausgebildet ist.

Ausgangsbasis ist eine Metallfolie, die mittels eines üblichen Schneidverfahrens, wie z. B. Wasserstrahlschneiden oder Laserschneiden, oder durch einen fotolithographischen Prozeß im zentralen Teil mäanderförmig strukturiert wird. Zur Erreichung einer gleichmäßigen Stromverteilung im Falle von Inhomogenitäten (heiße Stellen), sind widerstandsbildende Mäanderbahnen (16) in deren Längsrichtung mindestens einfach, vorzugsweise jedoch mehrfach durch zueinander parallele längliche Aussparungen (19) unterteilt, vgl. die ausschnittsweise Darstellung einer Mäanderbahn (16) in einem Ausschnitt (17). Zwischen in Längsrichtung aufeinanderfolgenden Aussparungen (19) sind aussparungsfreie Kühlinseln (18) mit einem vorgebbaren Längsabstand (a) vorgesehen, die eine erhöhte Nennstromtragfähigkeit ohne Rückwirkung auf das dynamische Ansprechverhalten unter Kurzschlußbedingungen erlauben. Mit zunehmendem Längsabstand (a) der einzelnen Aussparungen (19) voneinander kann die Nennstromtragfähigkeit weiter verbessert werden. Weitere Kühlinseln (18') sind endseitig an den Mäanderbahnen (16) vorgesehen.

Durch eine Faltung der strukturierten Metallfolie um die Schnittebene (A - A') um 180° wird ein besonders niederinduktiver Aufbau mit symmetrischer Zu- und Rückführung des Stromes erreicht.

Als Ausgangsbasis für den nichtsperrenden Kaltleiter (5) kann ein vorzugsweise ferromagnetisches Metall oder eine Metallegierung verwendet werden. Besonders geeignet sind Materialien auf der Basis von Nickel, Eisen oder Kobalt und deren Legierungen. Der gegenüber nichtferromagnetischen reinen Metallen besonders hohe positive Temperaturkoeffizient des spezifischen Widerstandes dieser Materialien weist ein für die Anwendung günstiges nichtlineares Verhalten auf mit einem Maximum im Bereich der Curietemperatur. Prinzipiell können jedoch auch nichtferromagnetische Metalle, wie Beryllium oder Ruthenium, mit einem Temperaturkoeffizienten des Widerstandes von > 4 · 10⁻³ K⁻¹ verwendet werden.

Anstelle einer strukturierten Metallfolie kann auch eine mittels eines chemischen oder elektrochemischen Prozesses erzeugte Schicht der vorstehend beschriebenen Materialzusammensetzung verwendet werden.

Das notwendige dynamische Ansprechverhalten des Kaltleiters (5) unter Kurzschlußbedingungen wird durch die Ausbildung einer geringen Querschnittsfläche des Aktivteiles erreicht. Typische Werte der Querschnittsfläche liegen für eine Beschaltung gemäß den Fig. 1 und 2 im Bereich von 0,1 mm² bis 5 mm², vorzugsweise im Bereich von 0,5 mm² bis 1,5 mm². Die Kaltwiderstandswerte bei Zimmertemperatur liegen im Bereich von einigen 10 mΩ - 100 mΩ.

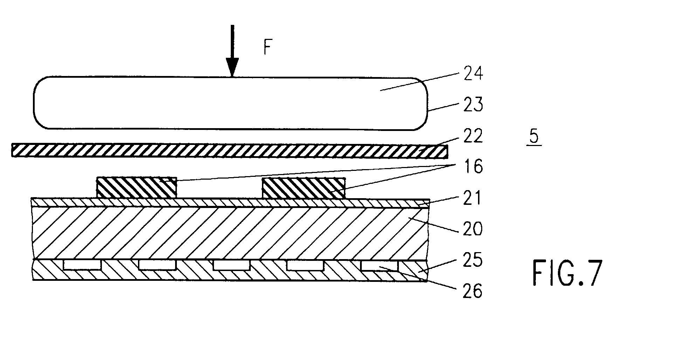

Fig. 7 zeigt den Prinzipaufbau eines nichtsperrenden, erdpotentialfrei betreibbaren Kaltleiters (5), dessen Widerstandsbahn in Fig. 6 dargestellt ist, in auseinandergezogener Darstellung ausschnittsweise im Querschnitt in einer zur Schnittebene (A - A') orthogonalen Schnittebene (B - B') in Fig. 6. Eine elektrisch isolierende, thermisch leitfähige Isolations- bzw. Keramikschicht (20), z. B. aus AlN oder BN oder Al₂O₃, steht mit einer 1. Hauptfläche mit einem metallischen Kühlelement (25) in einem elektrisch und thermisch gutleitenden Kontakt. Das Kühlelement (25) weist angrenzend an die 1. Hauptfläche der Keramikschicht (20) Kühlschlitze (26) auf, die im Betrieb von elektrisch leitfähigem Wasser (Brauchwasser) vorzugsweise turbulent durchströmt sind. Eine der 1. Hauptfläche gegenüberliegende 2. Hauptfläche der Keramikschicht (20) ist mit einer elektrisch isolierenden Wärmeleitschicht (21), z. B. aus Öl oder einer Wärmeleitpaste auf Silikonbasis, mit einer Dicke im Bereich von 10 µm - 100 µm bedeckt. Mäanderbahnen (16) des Widerstandskörpers des Kaltleiters (5), vgl. Fig. 6, sind zwischen diese Wärmeleitschicht (21) und eine elektrisch isolierende, vorzugsweise thermisch leitfähige, flexible, hochtemperaturbeständige Polymerfolie (22), z. B. aus einem Silikonelastomer, mit einer Dicke im Bereich von 0,2 mm - 10 mm, vorzugsweise im Bereich von 1 mm - 5 mm, gepreßt. Zum Anpressen kann ein Druckausgleichkissen oder Druckausgleichelement (23) vorgesehen sein, auf welches eine zur 2. Hauptfläche der Keramikschicht (20) orthogonale Kraft (F) einwirkt. Das Druckausgleichelement (23) kann z. B. aus einer dünnen, flexiblen Metallfolie bestehen, die zu einer geschlossenen Hülle verschweißt ist und eine Dicke im Bereich von 0,2 cm - 3 cm aufweist. Das Druckausgleichelement (23) ist mit einem dielektrischen oder elektrisch leitfähigen Fluid (24) mit einer Siedetemperatur über vorzugsweise 150 °C gefüllt. Als hochsiedende Fluide (24) können z. B. Karboxylatester, Polyolester, polymere Dimethylsiloxane oder aliphatische Pentaerythritester verwendet werden. Wahlweise kann zur Erhöhung der Nennstromtragfähigkeit ein weiterer, nicht dargestellter Kühlkörper in direkten Kontakt mit dem Druckausgleichelement (23) gebracht werden. Durch das Druckausgleichelement (23) wird einerseits eine gleichmäßige Anpressung der Widerstandsbahnen (16) an die Keramikschicht (20) und andererseits eine Ausgleichkühlung durch Konvektion zum Schutz der Widerstandsbahnen (16) vor einer partiellen Überhitzung erreicht.

Das Druckausgleichelement (23) kann insbesondere dann weggelassen werden, wenn die hochtemperaturbeständige Polymerfolie (22) aus Silikonelastomer oder aus einem anderen Elastomerwerkstoff besteht, eine Dicke im Bereich von 1,5 mm - 10 mm und eine Shorehärte im Bereich von 10 Shore A - 100 Shore A aufweist.

### BEZEICHNUNGSLISTE

- 1, 11: Netzstromrichter, 1. Stromrichter
- 2, 2': Gleichspannungszwischenkreise
- 3, 3': Kurzschlußstrombegrenzer, Strombegrenzer
- 4: Diode
- 5, 5', 15: Kaltleiter, PTC-Widerstände
- 6: Nebenschlußwiderstandszweig mit Varistor 7
- 7: Varistor, Überspannungsableiter
- 8, 12: Antriebsstromrichter, 2. Stromrichter
- 9: Thyristorbeschaltung von T1, T2
- 10: Wechselspannungsklemme von 8
- 13, 13': Mittelpunktleiter
- 14: ohmscher Widerstand
- 16: Mäanderbahn von 5, Widerstandsbahn aus einem Kaltleiterwerkstoff
- 17: Ausschnitt von 16
- 18, 18': Kühlinseln, Kühlstege
- 19: Aussparungen in 16
- 20: Isolation, Keramikschicht
- 21: Wärmeleitschichten
- 22: hochtemperaturbeständige Polymerfolie
- 23: Druckausgleichelement, Druckausgleichkissen
- 24: dielektrisches Fluid
- 25: Kühlelement
- 26: Kühlschlitze in 25
- 30: Induktivität, Drossel

- a: Längsabstand von 19
- A - A': Schnittebene in Fig. 6
- B - B': Schnittebene in Fig. 6, senkrecht zu A - A'
- C1, C2, C3: Zwischenkreiskondensatoren
- CF: Filterkondensator
- F: Kraft
- L, L1, L2: Drosseln, di/dt-Begrenzungsdrosseln
- LF: Filterdrossel
- N: negativer Pol, negative Polplatte
- P: positiver Pol, positive Polplatte
- T1, T2: GTO-Thyristoren

## Patentansprüche

1. Kaltleiter (5, 5', 15)
a) mit einer aus einer Metallfolie oder Metallschicht bestehenden Widerstandsbahn (16),
b) welche mit einer 1. und einer dieser gegenüberliegenden 2. Hauptfläche unter Zwischenlage einer 1. bzw. 2.elektrischen Isolationsschicht (20,22) gegen ein Kühlelement (25) angedrückt ist,
dadurch gekennzeichnet,
c) daß die Widerstandsbahn (16) niederinduktiv ausgebildet ist, derart daß im Betrieb benachbarte Abschnitte der Widerstandsbahn (16) von einem Strom in antiparalleler Richtung durchflossen werden,
d) daß die 1. elektrische Isolationsschicht (20) eine thermisch leitfähige Keramikschicht ist und
e) daß die 2. Isolationsschicht eine flexible, thermisch leitfähige Polymerfolie (22) aus einem Elastomerwerkstoff ist.

2. Kaltleiter nach Anspruch 1, dadurch gekennzeichnet,
a) daß die Polymerfolie (22), eine Dicke im Bereich von 1,5 mm - 10 mm und
b) eine Shorehärte im Bereich von 10 Shore A - 100 Shore A aufweist.

3. Kaltleiter nach Anspruch 1 oder 2, dadurch gekennzeichnet,
a) daß die Widerstandsbahn (16) über eine elektrisch isolierende Wärmeleitschicht (21) mit der Isolationsschicht (20) in Verbindung steht,
b) insbesondere, daß die Wärmeleitschicht (21) eine Wärmeleitpaste auf Silikonbasis ist und eine Dicke im Bereich von 10 µm - 100 µm aufweist.

4. Kaltleiter nach einem der vorhergehenden Ansprüche, dadurch gekennzeichnet,
a) daß die Polymerfolie (22) mit einem Druckausgleichelement (23) in Druckverbindung steht und
b) daß das Druckausgleichelement (23) aus einer Metallfolie besteht, die eine geschlossene Hülle bildet, welche mit einem dielektrischen oder elektrisch leitfähigen Fluid (24) gefüllt ist, das eine Siedetemperatur über 150 °C hat.

5. Vorrichtung zur Strombegrenzung (3)
a) mit mindestens einem Kaltleiter (5, 5') nach einem der vorhergehenden Ansprüche in einem 1. Stromzweig,
b) mit mindestens einem Varistor (7) in einem zum 1. Stromzweig elektrisch parallelgeschalteten 2. Stromzweig (6),
dadurch gekennzeichnet,
c) daß in dem 2. Stromzweig (6) in Reihenschaltung zu dem mindestens einen Varistor (7) ein ohmscher Widerstand (14) geschaltet ist.

6. Vorrichtung zur Strombegrenzung (3)
a) mit mindestens einem Kaltleiter (5, 5') nach einem der vorhergehenden Ansprüche in einem 1. Stromzweig,
b) mit mindestens einem Varistor (7) in einem zum 1. Stromzweig elektrisch parallelgeschalteten 2. Stromzweig (6),
dadurch gekennzeichnet,
c) daß in dem 2. Stromzweig (6) in Reihenschaltung zu dem mindestens einen Varistor (7) ein Kaltleiter (15) geschaltet ist.

7. Vorrichtung nach Anspruch 5 oder 6, dadurch gekennzeichnet, daß die Reihenschaltung in dem 2. Stromzweig (6) eine Induktivität (30) aufweist.

8. Vorrichtung nach einem der Ansprüche 5 bis 7, dadurch gekennzeichnet,
a) daß der 1. Stromzweig wenigstens 2 in Reihe geschaltete Kaltleiter (5, 5') aufweist,
b) wovon wenigstens ein 1. Kaltleiter (5) beim Erhitzen Widerstandsprünge auf weniger als das 100fache seines Kaltwiderstandes aufweist, und
c) wovon wenigstens ein 2. Kaltleiter (5') beim Erhitzen Widerstandsprünge auf mehr als das 100fache,
d) insbesondere auf mehr als das 10⁴fache seines Kaltwiderstandes aufweist.

9. Vorrichtung nach einem der Ansprüche 5 bis 8, dadurch gekennzeichnet, daß in einem zu dem 1. Stromzweig parallelgeschalteten 3. Stromzweig eine Diode (4) in Sperrichtung eines Kurzschlußpfades geschaltet ist.

## Claims

1. PTC thermistor (5, 5', 15)
a) having a resistive track (16), consisting of a metal sheet or metal layer,
b) which is pressed via a first main surface and a second main surface, opposite the latter, against a cooling element (25), with interposition of a respective first and second electrical insulation layer (20, 22), characterized (c) in that the resistive track (16) is low-inductively designed such that, in operation, a current flows through neighbouring sections of the resistive track (16) in an antiparallel direction,
(d) in that the first electrical insulation layer (20) is a thermally conductive ceramic layer, and
(e) in that the second insulation layer is a flexible, thermally conductive polymer sheet (22) made of an elastomer material.

2. PTC thermistor according to Claim 1, characterized
a) in that the polymer film (22) has a thickness in the range from 1.5 mm - 10 mm and
b) a Shore hardness in the range of 10 Shore A - 100 Shore A.

3. PTC thermistor according to Claim 1 or 2, characterized
a) in that the resistive track (16) is connected via an electrically insulating thermal-conduction layer (21) to the insulation layer (20),
b) in particular, the thermal-conduction layer (21) is a silicone-based heat-transfer compound and has a thickness in the range from 10 µm - 100 µm.

4. PTC thermistor according to one of the preceding claims, characterized
a) in that the polymer film (22) is in pressure contact to a pressure compensation element (23) and
b) in that the pressure compensation element (23) consists of a metal film which forms a closed shell that is filled with a dielectric or electrically conductive fluid (24) which has a boiling temperature of above 150°C.

5. Current limiter device (3)
a) having at least one PTC thermistor (5, 5') according to one of the preceding claims in a first circuit branch,
b) having at least one varistor (7) in a second circuit branch (6) electrically connected in parallel with the first circuit branch,
characterized
c) in that an ohmic resistor (14) is connected in the second circuit branch (6), in series connection with the at least one varistor (7).

6. Current limiter device (3)
a) having at least one PTC thermistor (5, 5') according to one of the preceding claims in a first circuit branch,
b) having at least one varistor (7) in a second circuit branch (6) electrically connected in parallel with the first circuit branch,
characterized
c) in that a PTC thermistor (15) is connected in the second circuit branch (6), in series connection with the at least one varistor (7).

7. Device according to Claim 5 or 6, characterized in that the series circuit in the second circuit branch (6) has an inductor (30).

8. Device according to one of Claims 5 to 7, characterized,
a) in that the first circuit branch has at least two PTC thermistors (5, 5') connected in series,
b) of which at least a first PTC thermistor (5) has on heating resistance jumps to less than 100 times its cold resistance, and
c) of which at least a second PTC thermistor (5') has on heating resistance jumps to more than 100 times,
d) in particular to more than 10⁴ times its cold resistance.

9. Device according to one of Claims 5 to 8, characterized in that a diode (4) is connected in the reverse-bias direction of a short-circuit path in a third circuit branch connected in parallel with the first circuit branch.

## Revendications

1. Thermistance (5, 5', 15)
a) avec une piste de résistance (16) constituée d'une feuille métallique ou d'une couche métallique,
b) qui est appuyée par une première surface principale et par une seconde surface principale située vis à vis de celle-ci avec l'interposition d'une première respectivement d'une seconde couche d'isolation (20, 22) contre un élément de refroidissement (25),
caractérisée
c) en ce que la piste de résistance (16) a une forme de faible inductance de telle sorte que pendant le fonctionnement, des segments voisins de la piste de résistance (16) soient traversés par un courant de sens antiparellèle,
d) en ce que la première couche d'isolation électrique (20) au moins est une couche de céramique conductrice thermique et
e) en ce que la seconde couche d'isolation est une feuille de polymère (22) flexible, conductrice thermique, en matériau élastomère.

2. Thermistance selon la revendication 1, caractérisée
a) en ce que la feuille de polymère (22) présente une épaisseur dans la plage de 1,5 mm - 10 mm et
b) une dureté Shore dans la plage de 10 Shore A. - 100 Shore A.

3. Thermistance selon la revendication 1 ou 2, caractérisée
a) en ce que la piste de résistance (16) est reliée à la couche d'isolation (20) par l'intermédiaire d'une couche (21) conductrice de la chaleur, électriquement isolante,
b) en particulier en ce que la couche (21) conductrice de la chaleur est une pâte conductrice de la chaleur à base de silicone et qui présente une épaisseur dans la plage de 10 µm - 100 µm.

4. Thermistance selon l'une des revendications précédentes, caractérisée
a) en ce que la feuille de polymère (22) est reliée par pression à un élément (23) de répartition de la pression et
b) en ce que l'élément (23) de répartition de la pression est constitué d'une feuille métallique qui constitue une enveloppe fermée qui est remplie d'un fluide diélectrique ou électriquement conducteur présentant une température, d'ébullition supérieure à 150°C.

5. Dispositif de limitation du courant (3)
a) avec une thermistance (5, 5') au moins selon l'une des revendications précédentes dans une première branche de courant,
b) avec une varistance (7) au moins, dans une seconde branche de courant (6), branchée en parallèle avec la première branche de courant,
caractérisé
c) en ce que dans la seconde branche de courant (6), une résistance ohmique (14) est branchée en série avec une varistance (7) au moins.

6. Dispositif de limitation du courant (3)
a) avec une thermistance (5, 5') au moins selon l'une des revendications précédentes dans une première branche de courant,
b) avec une varistance (7) au moins, dans une seconde branche de courant (6), branchée en parallèle avec la première branche de courant,
caractérisé
c) en ce que dans la seconde branche de courant (6), une thermistance (15) est branchée en série avec une varistance (7) au moins.

7. Dispositif selon la revendication 5 ou 6 caractérisé en ce que le branchement en série dans la seconde branche de courant (6) présente une inductance (30).

8. Dispositif selon l'une des revendications 5 à 7, caractérisé
a) en ce que la première branche de courant présente deux thermistances (5, 5') au moins branchées en série,
b) dont une première thermistance (5) au moins présente lors de l'échauffement, des sauts de résistance de moins de 100 fois sa résistance à froid, et
c) dont une seconde thermistance (5') au moins présente lors de l'échauffement, des sauts de résistance de plus de 100 fois
d) en particulier de plus de 10⁴ fois sa résistance à froid.

9. Dispositif selon l'une des revendications 5 à 8, caractérisé en ce que dans une troisième branche de courant branchée en parallèle avec la première branche de courant, une diode (4) est branchée dans le sens bloquant d'un chemin de court-circuit.
